# EUROPEAN PATENT SPECIFICATION

(11) **EP 0 902 867 B1**
(45) Date of publication and mention of the grant of the patent: **19.03.2003**
(21) Application number: 97927574.0
(22) Date of filing: 11.06.1997
(51) Int. Cl.: F16L 37/42

(54) **HOSE CONNECTION**
SCHLAUCHVERBINDUNG
RACCORD POUR TUYAUX

(30) Priority: 11.06.1996 SE 9602292
(43) Date of publication of application: 24.03.1999
(73) Proprietor: ENGDAHL, Björn, 411 24 Göteborg (SE)
(72) Inventor: ENGDAHL, Björn, 411 24 Göteborg (SE)
(74) Representative: Hammond, Andrew David
(86) International application number: SE9701028
(87) International publication number: WO97047911

(56) References cited:
- EP-A- 0 097 089
- SE-B- 470 452
- US-A- 4 060 219

## Description

A hose coupling incorporates a male part and a female part, which is surrounded by an axially displaceable sleeve, which affects the retainment and the releasing of the male part, respectively.
In a workshop having tools connected to a net of pressurized air, it is often necessary to move or exchange tools. At disconnection with a conventional coupling is created a hard bang, at the same time as the reaction force of the escaping pressurized air throws the hose portion outwards.

A more recent type of coupling incorporates a locking member, which makes it possible to bring about a partial release of the male part for blowoff of the air pressure before the parts of the coupling are entirely separated.
In SE-B-470452 is described such a hose coupling with a male part and a female part, having an axially displaceable slide, and is enclosed in an axially displaceable sleeve arranged to close a passage through the coupling in one position and to open it at axial displacement caused by introduction of the male part in the female part, the coupling has further one locking pawl, designed as a two-branched lever, balancing on a nib in the female member, and the front cam of which has a locking function onto the male member and the rear cam of which has an interacting locking function with the spring-loaded ring on the slide for holding the inserted male member in sealing contact with the female member, whereby the sleeve at axial displacement releases the locking pawl and keeps the male member in a locking position by means of at least one locking ball after initial movement outwards of the male member.

The above mentioned drawback thereby has been eliminated. A secure locking of the parts in connection position can however be difficult to obtain without requiring very large power when the parts shall be separated.
The present invention refers to a hose coupling of the above mentioned type, wherein the locking pawl has been designed for establishing optimized retainment, without it thereby being necessary to use large power for separating the parts of the coupling, when needed.

A hose coupling according to the invention is characterized therein that the locking pawl is T-shaped and is insertable in a cross-formed groove in the female part. The crossbeam of the locking pawl preferably has smaller thickness than the web of the pawl. The pawl is safely guided in its slot, thus that the crossbeam can be easily picked out from the cross groove part, when the male part finally shall be pulled out. The crossbeam end of the web portion is preferably made thicker and shaped to a transversal ridge, which in coupling position cooperates with a circumferential locking groove in the male part. The web portion, from the reverse end of the cross beam, is preferably angled, thus that it, in angular position reaches into a circumferential groove in the nonreturn valve.

**Hereinafter the invention will be described with reference to the accompanying drawings, in which :**
- Fig. 1: shows a hose coupling according to the invention. In a vertical section through the upper half thereof and a horizontal section through the right hand half thereof.
- Fig. 2-5: show encircled area of fig. 1 at which is shown relative positions between male part and female part.
- Fig. 6: shows a perspective view of a locking pawl.
- Fig. 7: shows a partial amendment of the female part.

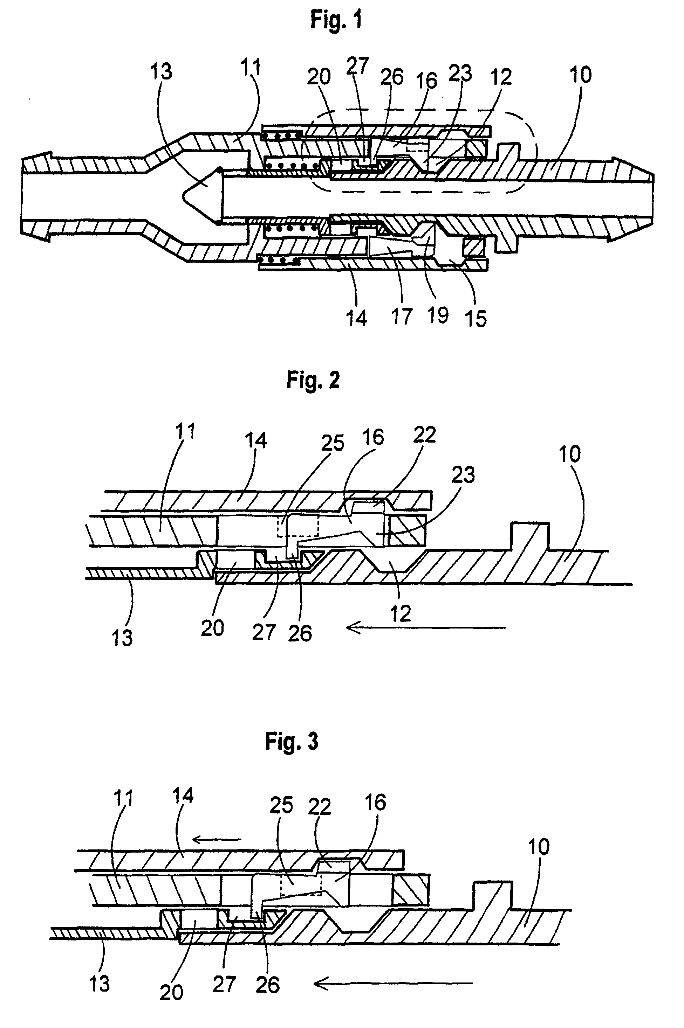

Fig. 1 shows the coupling in functional position. The coupling incorporates a male part 10 and a female part 11. The nipple of the male part, which is insertable into the female part, is provided with a circumferential locking groove 12. The female part is equipped with a slide-shaped, spring-loaded nonreturn valve 13, and it is enclosed by a sleeve 14, which is also spring-loaded. This is equipped with an internal, circumferential groove 15. The sleeve 14 guides at one hand at least one locking pawl 16, and on the other hand at least one locking member 17.

When the male part is fully inserted in the female part, the sleeve 14 is retained by its spring in a position wherein the groove has been moved beyond locking pawl 16 and locking member 17, thus that these are retained in a secure engagement with the locking groove 12 of the male part.

The locking member 17 is angular with an elongated web portion, which is insertable in a groove 18 in the female part and an edge-shaped pawl portion 19, which projects into the locking groove 12 of the male part and in functional position abuts the outer edge thereof.

At disconnection of the parts, the sleeve 14 is moved backwards and thereby guarantees the engagement of the edge 19 of the locking member 17 with the locking groove 12, whereby the locking pawl 16 releases the grip about the nipple of the male part 10, which is urged outwards, and the nonreturn valve closes. The locking member 17 has followed the axial displacement outwards of the locking groove 12 with a secure engagement of the edge 19. The blowoff holes 20 now will be situated just in front of the groove 18 and the cross-formed groove 24 in the female part. Pressurized air remaining in the coupling and in the hose connected to the male part, then can be blown off without any disturbing sound.

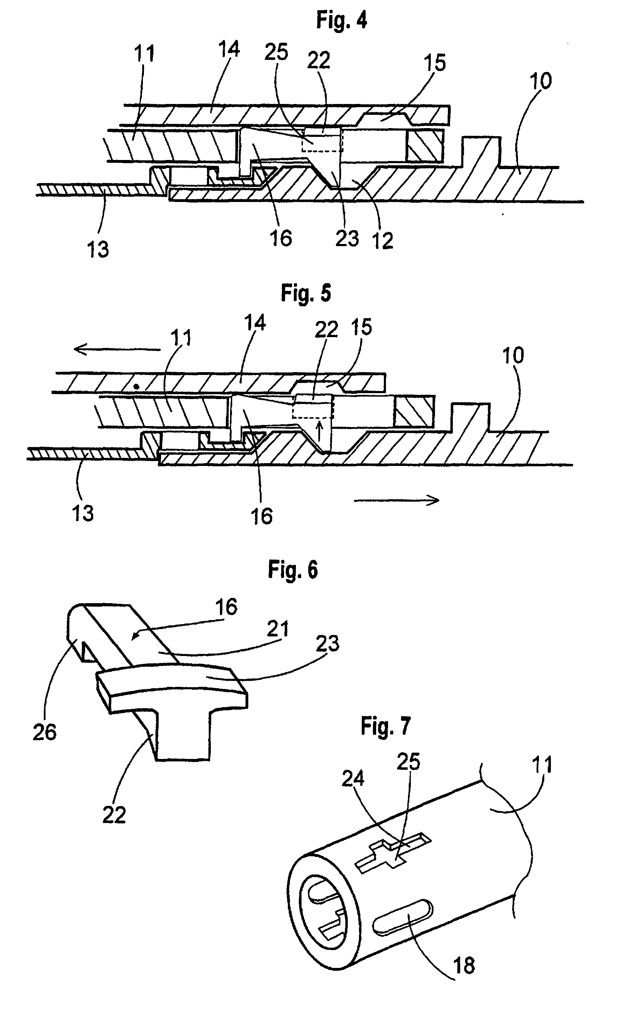

After the sleeve 14 has been pushed forward by the spring, the inner inclined side of the locking groove 12 finally presses out the edge end of the locking member 17 into the groove 15 of the sleeve, thus that the engagement of the locking member in the male part is completely suspended. As can be best seen in fig. 7 the locking member 16 is T-shaped in an elongated web portion 21 and a cross beam 22. This is thinner than the web portion, which adjacent the cross beam end is shaped to a transversal ridge 23. The outer edges of the cross beam is preferably curved corresponding to the contour of the female part.

In the coupling position shown in fig. 1 the sleeve 14 urges the cross beam 22 inwards, and urges then the edge 23, situated right inside, against the groove 12 in the male part. This efficiently ascertains retention and makes possible disconnection without large force.

In an earlier embodiment the locking pawl has been shaped as a two-armed lever, which has caused that the air pressure could exercise a hard pressure which has increased the resistance at disconnection, at the same time as the risk for deformation of the pawl has been present.

The locking pawl 16 is insertable in a cross-shaped groove 24 in the female part. The groove has an elongated main part and a cross groove 25 corresponding to the crossbeam 22 in the locking pawl.

When, at disconnection, the locking pawl 16 has released its engagement with the male part, the inclined inner wall of the locking groove 12 in the same manner as the locking member 17, will urge the end of the locking pawl 16 outwards, into the groove 15 in the retracted sleeve 14, whereby the male part will be entirely free.

The end of the locking pawl 16 facing away from the crossbeam 22 is angled with a part 26, which reaches into a circumferential groove 27 in the nonreturn valve. The angled part stabilizes the locking pawl, and the groove 27 has such an axial extent that the nonreturn valve can be closed without possibility for the locking pawl to be displaced.

Figs. 2-5 show the position of the locking pawl at different relative positions between male part and female part.

In fig.2 the male part has just been pushed in so far that it has come to engagement with the closed nonreturn valve 13. The crossbar 22 of the pawl is pushed into the groove 15 of the sleeve 14.

In fig. 3 the pushing in of the male part is almost finished, the holes 20 are enclosed by the female part, and the opened nonreturn valve pulls via the engagement between the angled part 26 and the groove 27 the sleeve 14 backwards.

Fig. 4 corresponds to the position in fig. 1, i.e. the locking position. The cross beam 22 has fallen into the cross groove 25, and the sleeve 14 has been pushed forward by means of its spring. When the male part shall be released the sleeve 14 is pulled backwards, such as shown in fig. 5. The annular groove 15 in the sleeve then will be positioned just above the cross beam 22 of the pawl and when the male part is pulled outwards, the inner sloping side wall in the locking groove 12 will press the cross beam in the groove 15 of the sleeve upwards, thus that the nipple will be completely free.

Fig. 7 shows a partial change of the female part. This is equipped with two, diametrically opposed cross formed grooves 24 for the locking pawl, and straight grooves 18 for the locking body 17, displaced 90° relative to the first mentioned.

The embodiments shown are only an example and the details of the coupling can be varied in several manners within the scope of the accompanying claims.

## Claims

1. Hose coupling comprising a male part (10) with a circumferential groove (12) and female part (11), where the female part is equipped with a nonreturn valve (13), which is actuatable at inserting of the male part, and which controls the flow through the coupling, and which female part is enclosed by an axially displaceable sleeve (14) having an inner cirumferiential groove (15) which acts upon at least one locking pawl (16) which retains the inserted male part, and at least one locking body (17), which locking body at disconnection and partial retraction of the male part transiently permits blowing off the air pressure in the coupling, **characterized in that** the locking pawl (16) is T-shaped and insertable in a correspondingly cross-formed groove (24) in the female part (11), that the locking pawl (16) has a cross beam (23), that the web portion (21) of the pawl at the cross beam end is made thicker and shaped to a transversal ridge (22), which in coupling position cooperates with the circumferential locking groove (12) in the male part (10), an that, at disconnection, when the locking pawl (16) releases its engagement with the male part, the inclined inner wall of the locking groove (12), in the same manner as for the locking member (17), urges the beam (23) of the locking pawl (16) outwards, into the groove (15) in the retracted sleeve (14), thereby making the male part entirely free.

2. Hose coupling as claimed in claim 1, **characterized in that** the cross beam (23) of the locking pawl (16) has smaller thickness than the web portion (21) of the pawl.

3. Hose coupling as claimed in claim 2, **characterized in that** the upper surface of the cross beam (22) is curved in correspondence to the female part (11).

4. Hose coupling as claimed in claim 2 or 3,
**characterized in that** the end (26) of the web portion (21) facing away from the cross beam (23) is angled and in mounted position projects into a circumferential groove (27) in the nonreturn valve (13).

5. Hose coupling according to anyone of the preceding claims,
**characterized in that** the female part (11) is equipped with two diametrically opposed cross-formed grooves (24) for the locking pawl and two straight grooves (24) for the locking body, which are displaced 90° relative to the first mentioned cross formed grooves (24).

## Patentansprüche

1. Schlauchkupplung, umfassend ein Steckteil (10) mit einer Umfangsnut (12) und ein Muffenteil (11), wobei das Muffenteil mit einem Rückschlagventil (13) ausgerüstet ist, das beim Einsetzen des Steckteils betätigbar ist und das den Durchfluss durch die Kupplung steuert, wobei das Muffenteil von einer in axialer Richtung verschiebbaren Hülse (14) mit einer inneren Umfangsnut (15) umschlossen ist, die auf zumindest eine Sperrklinke (16), die das eingesetzte Steckteil zurückhält, und zumindest einen Sperrkörper (17) wirkt, der bei Trennung und teilweisem Zurückziehen des Steckteils stoßartig das Abblasen des Luftdruckes in der Kupplung erlaubt,
**dadurch gekennzeichnet, dass** die Sperrklinke (16) T-förmig und in eine entsprechend kreuzförmige Ausnehmung (24) in dem Steckteil (11) einsetzbar ist,
dass die Sperrklinke (16) einen Querbalken (23) aufweist,
dass der Stegabschnitt (21) der Sperrklinke am Ende des Querbalkens dicker gemacht und zu einem querverlaufenden Steg (22) geformt ist, der in Kupplungstellung mit der Umfangssperrnut (12) in dem Steckteil (10) zusammenwirkt, und dass bei einer Trennung, wenn die Sperrklinke (16) aus ihrem Eingriff mit dem Steckteil freigegeben ist, die geneigte Innenwand der Sperrnut (12) in der gleichen Art und Weise, was das Sperrelement (17) betrifft, den Querbalken (23) der Sperrklinke (16) nach außen in die Nut (15) in der zurückgezogenen Hülse (14) drückt, wodurch das Steckteil völlig freigegeben wird.

2. Schlauchkupplung nach Anspruch 1, **dadurch gekennzeichnet, dass** der Querbalken (23) der Sperrklinke (16) eine kleinere Dicke aufweist als der Stegabschnitt (21) der Sperrklinke.

3. Schlauchkupplung nach Anspruch 2, **dadurch gekennzeichnet, dass** die obere Fläche des Querbalkens (22) im Bereich zu dem Muffenteil (11) gekrümmt ist.

4. Schlauchkupplung nach Anspruch 2 oder 3, **dadurch gekennzeichnet, dass** das von dem Querbalken (23) weg weisende Ende (26) des Stegabschnittes (21) abgewinkelt ist und in montierter Stellung in eine Umfangsnut (27) im Rückschlagventil (13) hervorsteht.

5. Schlauchkupplung nach einem der vorhergehenden Ansprüche, **dadurch gekennzeichnet, dass** das Muffenteil (11) mit zwei genau entgegengesetzten kreuzförmigen Ausnehmungen (24) für die Sperrklinke und zwei geradlinigen Ausnehmungen (24) für den Sperrkörper, die 90° relativ zu den zuerst erwähnten kreuzförmigen Ausnehmungen (24) versetzt sind, versehen ist.

## Revendications

1. Raccord de tuyaux comprenant une partie mâle (10) avec une rainure circonférentielle (12) et une partie femelle (11), dans lequel la partie femelle est équipée d'un clapet anti-retour (13) qui est actionnable à l'insertion de la partie mâle, et qui contrôle l'écoulement dans le raccord, laquelle partie femelle est enfermée dans un manchon (14) mobile de manière axiale, ayant une rainure circonférentielle intérieure (15) qui agit sur au moins un cliquet de verrouillage (16) qui retient la partie mâle insérée, et au moins un corps de verrouillage (17), lequel corps de verrouillage au moment de la déconnexion et de l'escamotage partiel de la partie mâle permet transitoirement d'évacuer la pression d'air dans le raccord, ***caractérisé en ce que*** le cliquet de verrouillage (16) est conformé en T et est insérable dans une rainure (24) conformée de manière correspondante en croix dans la partie femelle (11), ***en ce que*** le cliquet de verrouillage (16) possède une traverse (23), ***en ce que*** la portion formant âme (21) du cliquet à l'extrémité de la traverse est configurée plus épaisse et conformée en nervure transversale (22) qui, en position de raccordement, coopère avec la rainure circonférentielle de verrouillage (12) dans la partie mâle (10), et ***en ce que,*** au moment de la déconnexion, lorsque le cliquet de verrouillage (16) libère sa prise avec la partie mâle, la paroi intérieure inclinée de la rainure de verrouillage (12), de la même manière que pour l'élément de verrouillage (17), force la traverse (23) du cliquet de verrouillage (16) vers le dehors, dans la rainure (15) dans le manchon rétracté (14), libérant ainsi totalement la partie mâle.

2. Raccord de tuyaux selon la Revendication 1, ***caractérisé en ce que*** la traverse (23) du cliquet de verrouillage (16) a une plus faible épaisseur que la partie âme (21) du cliquet.

3. Raccord de tuyaux selon la Revendication 2, ***caractérisé en ce que*** la surface supérieure de la traverse (23) est courbe, en correspondance avec la partie femelle (11).

4. Raccord de tuyaux selon la Revendication 2 ou 3, ***caractérisé en ce que*** l'extrémité (26) de la partie âme (21) à l'opposé de la traverse (23) est recourbée en angle et, en position montée, se projette dans une rainure circonférentielle (27) ménagée dans le clapet anti-retour (13).

5. Raccord de tuyaux selon l'une quelconque des Revendications précédentes, ***caractérisé en ce que*** la partie femelle (11) est munie de deux rainures (24) diamétralement opposées formant une croix pour le cliquet de verrouillage et de deux rainures droites (24) pour le corps de verrouillage, qui sont décalées de 90° par rapport aux premières rainures (24) formant croix mentionnées.
